Europäisches Patentamt

European Patent Office

Office européen des brevets

(11) Publication number: **0 038 384**
**B1**

(12) EUROPEAN PATENT SPECIFICATION

(45) Date of publication of patent specification: **14.11.84**

(51) Int. Cl.³: **F 41 D 10/28, B 65 G 47/52**

(21) Application number: **80301178.2**

(22) Date of filing: **11.04.80**

(54) Reciprocating feed system and automatic machine gun incorporating same.

(43) Date of publication of application:
**28.10.81 Bulletin 81/43**

(45) Publication of the grant of the patent:
**14.11.84 Bulletin 84/46**

(84) Designated Contracting States:
**BE CH DE GB LI NL SE**

(56) References cited:
EP-A-0 021 717
CH-A- 379 968
US-A-2 876 680
US-A-2 889 749
US-A-2 977 856
US-A-3 722 356
US-A-3 741 069
US-A-3 834 272

(73) Proprietor: **FORD AEROSPACE &
COMMUNICATIONS CORPORATION
300 Renaissance Center P.O. Box 43339
Detroit, Michigan 48243 (US)**

(72) Inventor: **Washburn, William J.
26501 Palisade Drive
Capistrano Beach, California 92624 (US)**
Inventor: **Thompson, Hugh B.
13141 Laurinda Way
Santa Ana, California 92705 (US)**
Inventor: **La Fever, Clifford E.
24201 Adonis
Mission Viejo, California 92675 (US)**

(74) Representative: **Crawford, Andrew Birkby et al
A.A. THORNTON & CO. Northumberland House
303-306 High Holborn
London WC1V 7LE (GB)**

Courier Press, Leamington Spa, England.

EP 0 038 384 B1

## Description

This invention relates to a feed system, particularly for an automatic machine gun.

Automatic machine guns require rapid feeding of ammunition into the firing chambers. One of the more common type feeding devices is a rotor placed behind the firing chambers. The rotor draws in a belt of ammunition as it rotates. Often the rotor rotates in an intermittent fashion such that during the stop mode a bolt lug will ram a round of ammunition into one firing chamber and another bolt lug will eject an empty or misfired cartridge from a second chamber. Such devices are disclosed in U.S. patent 3,834,272 issued to Patenaude et al on September 10, 1974, U.S. Patent 2,972,286 to Marquardt on February 21, 1961; U.S. Patent 2,889,749 to Janson on June 9, 1959; U.S. Patent 3,760,683 to Seemann on September 25, 1973, U.S. Patent 3,733,960 to Ashley et al, on May 22, 1973, U.S. Patent 3,722,356 to Tassie et al on March 27, 1973; U.S. Patent 3,868,884 to Rose et al on March 4, 1975 and U.S. Patent 3,741,069 to Stewart et al on June 26, 1973.

Some rotors have been devised to receive ammunition from a magazine one at a time while rotating in a single direction. Two such devices are disclosed in U.S. Patent 3,618,451 issued to Smith et al on November 9, 1971 and U.S. Patent 2,976,770 issued to Fletcher on March 28, 1961.

U.S. Patent 3,667,147 issued to Goldin et al on June 6, 1972 discloses a rifle with a reciprocally moving breech block which receives both live and spent ammunition.

U.S. Patent 2,977,856 issued to Fletcher on April 14, 1961 discloses a rotating sprocket in a multi-barrel rifle which has three bores. Each bore receives both live ammunition and spent cases. U.S. Patent 2,876,680 issued to Meyer et al on March 10, 1959 discloses a reciprocating sprocket in a twin-barrel gun which sprocket has two chambers which alternately line up with respective barrels of the gun. In one position, the first chamber is aligned with a feed system supplying an ammunition round to the first chamber, while the second chamber is aligned with its respective barrel allowing a previously fed round to pass to the barrel; in the other position, the second chamber is aligned with the feed system for recharging with a new ammunition round and the first chamber is aligned with its barrel.

It is an object of the present invention to provide a simple and compact article handling system, suitable for use in an automatic gun for feeding ammunition thereto, in which discharge of articles from the work station can readily be achieved as feeding the articles thereto.

From one aspect, the present invention provides an article handling system comprising a work station, means for feeding articles to the work station, said feeding means including a feed member mounted for rotation by a drive means and having a receptacle slot opening into the perimeter of the feed member and parallel to the rotational axis thereof for receiving articles for transfer to the work station in accordance with rotation of the feed member between first and second positions, the drive means being arranged to rotate the feed member so that in the first position the receptacle slot receives one article from a conveyor and in the second position that article can pass from the receptacle slot to the work station, characterised in that the feed member further includes a discharge slot arranged so that in the first position the discharge slot receives another article from the work station and in the second position the other article can be ejected from the discharge slot, the discharge slot also opening into the perimeter of the feed member and that an ejector cam member is provided which is rotatably driven by a further drive means synchronised with the first-mentioned drive means so that the cam member abuts the other article held in the discharge slot as the feed member rotates from the second position to the first position to move the other article radially outwardly from the discharge slot.

From another aspect, the present invention provides an article handling system comprising first and second work stations, means for feeding articles from a conveyor to the work stations, the feeding means including first and second receptacle means for receiving the articles from the conveyor, and a drive means for reciprocating each of the receptacle means between a first position wherein to receive an article from the conveyor and a second position in communication with the respective work station so that the articles can pass from the receptacle means to the work stations, characterised in that there are provided first and second discharge means each reciprocating between a first position for receiving used articles from the first and second work stations respectively and a second position for passing the used articles through an outlet, a synchronising means for reciprocating the discharge means between two positions such that the first discharge means is in its first position when the first receptacle means is in its respective first position and the second discharge means and second receptacle means are in their respective second positions, and the first discharge means is in its second position when the first receptacle means is in its respective second position and the second discharge means and second receptacle means are in their respective first positions, and an ejection means for ejecting the used articles from the respective discharge means when in their respective second positions.

Preferably the feed member or means is a sprocket rotatably mounted about its central longitudinal axis, and having receptacle and discharge slots circumferentially and longitudinally spaced about the perimeter thereof. The drive means oscillates the sprocket pivotably about the central axis between a first and second position.

In one preferred embodiment, the ejector means is a cam which oscillates between two positions. The cam passes through one of the discharge slots as the sprocket moves between its two positions to eject the used articles from the discharge slot. A second drive means oscillates the ejector cam through the discharge slots.

The drive means for the sprocket preferably includes a driveshaft mounted to the sprocket and aligned with the longitudinal central axis of the sprocket. The driveshaft has a pinion gear rigidly mounted thereto. The pinion gear engages a rack. The rack is slideably mounted to the housing. The face cam gear has a groove on one side thereof variably spaced from the central axis of rotation. The rack has one end slideably coupled to the groove of the face gear. As the cam gear rotates, it reciprocates the rack back and forth which in turn oscillates the pinion gear and sprocket connected thereto.

The second drive means, which oscillates the ejector cam, includes a driveshaft mounted to a second pinion gear. The driveshaft of the ejector cam is coaxially mounted with the driveshaft mounted to the sprocket. In the same fashion as the first drive means, the second pinion gear is mounted to the ejector driveshaft which engages with a second rack which is driven by the face cam gear for reciprocating movement.

In one embodiment, the sprocket has a hollow interior for housing the ejector cam and has a profile tooth positioned between the two discharge slots extending radially outward from the axial center of the sprocket. The outer portion of the profile tooth has surfaces inclined towards each other. The surfaces of the profile tooth form one portion of the first and second discharge slots. The radially outer portion of the profiled tooth extends radially farther outward than the outer-radial portion of the ejector cam.

In one embodiment, the sprocket and ejector cam are fitted within a bore in the housing. The housing has an inlet passage and outlet passage aligned with the first position of the receptacle slots and second position of the discharge slots respectively.

In one embodiment, the housing has two camming surfaces at the edge of the outlet passage which align with the edges of the discharge slots when in their second positions.

In one embodiment, the housing is mounted to a gun with a barrel mounted in front of the feeding means. The work station is a firing chamber positioned between the barrel and feeding means. The articles are rounds of ammunition and the used articles are empty cartridges or mis-fired cartridges commonly referred to as duds.

In operation, the sprocket is positioned such that a receptacle slot and discharge slot are in their respective first positions to receive an article from the supply source and used article from the work station respectively. The drive means for the sprocket rotates the sprocket to move the receptacle and discharge slots to their respective second position. The drive means for the ejector moves the ejector cam laterally through a discharge slot which is momentarily stationary in its second position and the ejector cam moves the article from the discharge slot radially outward into the outlet which is aligned with the discharge slots in the second position. At the same time, one receptacle slot is in its second position to deliver an article therein to the work station. Rams slide the article from the receptacle slot to the work station. The drive means for the sprocket then rotates the sprocket moving the emptied receptacle and discharge slots back to their respective first positions. The profiled tooth moves toward the ejector cam wherein the tapered surface of the profiled tooth abuts against the used article and radially moves it outwardly past the outlet. The used articles abut one of the camming surfaces of the outlet slot as it passes through the outlet.

Drive means of the ejector cam then pass the ejector cam to its second position ready to reciprocate back to its first position. The drive means of the sprocket continues to turn the sprocket such that the emptied receptacle slot and discharge slot are returned to their first position to receive another article and used article respectively.

In this fashion, a feeding mechanism which is capable of rapid cyclic movement is manufactured with a minimum amount of parts and can be made lightweight and in a compact volume which would be suitable for a lightweight machine gun.

In order that the present invention be more readily understood, an embodiment thereof will now be described by way of example with reference to the accompanying drawings, in which:—

Figure 1 is a rear elevational schematic view of a preferred embodiment of the invention;

Figures 2(A) to 2(I) are a series of schematic rear plan views showing sequential positions of the sprocket and the ejector cam illustrated in Figure 1;

Figure 3 is a perspective view of the sprocket shown in Figure 1;

Figure 4 is a perspective view of the ejector cam shown in Figure 1;

Figure 5 is a perspective partially cross-sectional view of the embodiment illustrated in Figure 1;

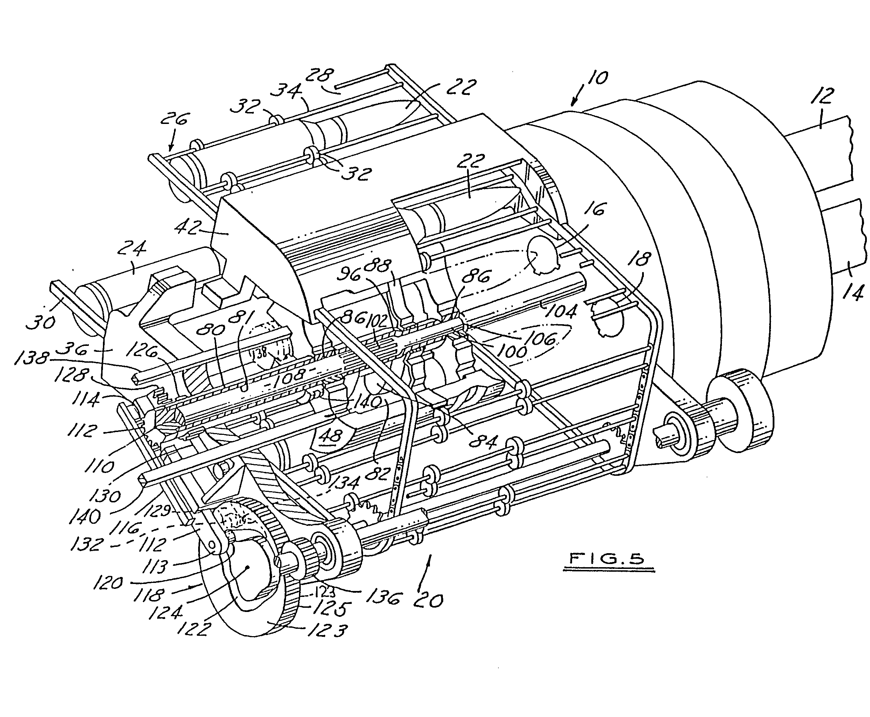

Referring to Figure 5, a rapid fire machine gun 10 has two barrels 12 and 14 and two aligned firing chambers 16 and 18. Behind the firing chambers 16 and 18 is a feeding mechanism 20 mounted to housing 36. The feed mechanism 20 feeds ammunition 22 to the firing chambers 16 and 18 and withdraws spent and misfired ammunition 24 from the firing chambers.

A conveyor 26 has a supply portion 28 passing above the firing chambers 16 and 18 with fresh ammunition 22 and a return portion 30 passing below the firing chambers 16 and 18. The conveyor 26 has spacers 32 mounted on rods 34 which move with the conveyor 26 to space and hold the plurality of linkless ammunition rounds 22 and 24.

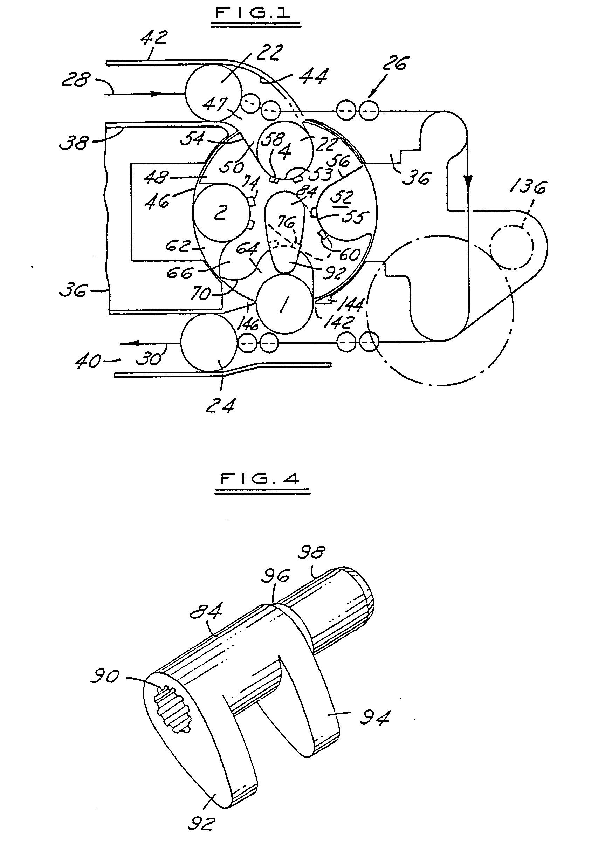

As more clearly shown in Figure 1, the housing 36 has an upper surface 38 which functions as a platform for the ammunition 22 in conveyor 26. The lower portion of housing 36 has a channel 40 which guides the return portion 30 of the conveyor 26. A fixed fence 42 is mounted to the housing 36. The fixed fence has a convex lower surface 44 which forces the ammunition 22 downward as the conveyor 26 passes thereby. Below the conveyor supply portion 28, a sprocket 48 is mounted within a circular bore 46 of housing 36.

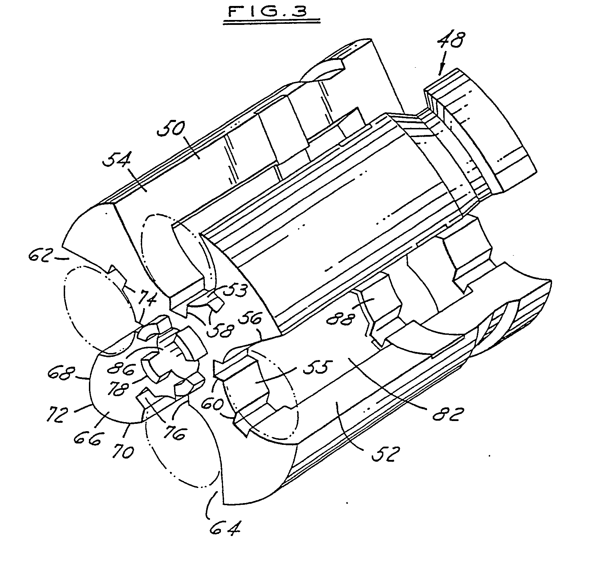

Referring specifically to Figure 3, the sprocket has two receptacle slots 50 and 52 each sized to receive a round of ammunition. The slots 50 and 52 are circumferentially spaced about the central longitudinal axis of the sprocket and longitudinally aligned therewith. Each slot 50 and 52 has an inclined side surface 54 and 56, respectively, which is inclined with respect to a radius of the sprocket. Inner portions of the slots 50 and 52 have a circular arced portion 53 and 55 with grooves 58 and 60 therein.

Two other discharges slots 62 and 64 are also circumferentially placed about the sprocket in a longitudinal direction. Slots 62, 64, 50 and 52 are each positioned approximately 90° with respect to each other about the sprocket. A profile tooth 66 has outer side surfaces 68 and 70 which taper toward each other to an outer point 72. The side surfaces 68 and 70 form a portion of the respective slots 62 and 64. Discharge slots 62 and 64 also have recessed grooves 74 and 76, respectively. The grooves 58 and 74 receive bolt lugs 138 and grooves 60 and 76 receive bolt lugs 140 as shown in Figure 5.

The sprocket 48 has an interior hollow section 82 adapted to house an ejector piece 84. Also, a central aperture 86 extends through the two ends of the sprocket. Within the interior hollow 82, a shoulder section 88 conforms to the surface of each slot 50, 52, 62, and 64. The The rear end of the sprocket has a splined section 78 adapted to receive a driveshaft 80 as shown in Figure 5. Driveshaft 80 has an axially aligned bore 81 extending therethrough.

Referring to Figure 4, the ejector piece 84 has an internally splined bore 90 extending therethrough. Two aligned cams 92 and 94 are spaced apart and radially extend outwardly from the longitudinal axis of the bore 90. The ejector 84 has a narrower cylindrical extension 98 extending from a shoulder 96.

Referring back to Figure 5, the ejector cam 84 and sprocket 48 are mounted on a driveshaft 100. The driveshaft 100 has a complementary spline section 102 which meshes with the internally splined bore 90 of ejector cam 84. The driveshaft extends outward from the sprocket 48 through the apertures 86. A forward portion 104 of driveshaft 100 has an outwardly extending shoulder portion 106 which engages a forward end of sprocket 48 to retain the sprocket 48 in a rearward position. The rear portion 108 of driveshaft 100 extends through the bore 81 of driveshaft 80. The driveshaft 100 has its rear end rigidly fastened to a sector gear 110. Shoulder 96 of the ejector cam abuts band 88 to retain the ejector cam in a fixed longitudinal position with respect to sprocket 48.

The sector gear 110 meshes with a rack section 112 slideably mounted in a groove 114 in a frame 116. The rack 112 has its end 113 mounted to a face cam gear 118 by a follower lug 120 recessed in a grooved pathway 122 in the forward face 123 of face cam gear 118. The face cam gear 118 is rotatably mounted about its central axis by pin 124.

Similarly, driveshaft 80 has its rear end affixed to a sector gear 126 which is meshed with the rack section 128 slidably mounted in groove 130 in rach frame 116. Rack frame 116 is bolted onto housing 36. The free end 129 of rack section 128 is also mounted to the face cam gear 118 by means of a lug 132 recessed in a second grooved pathway 134 on the opposite face 125 of the face cam gear 118.

The face cam gear 118 is driven by a gear assembly 136 which drives both the ejector cam and the sprocket in an oscillating fashion. The gear assembly 136 is also operably connected to bolt lugs 138 and 140 and conveyor 26.

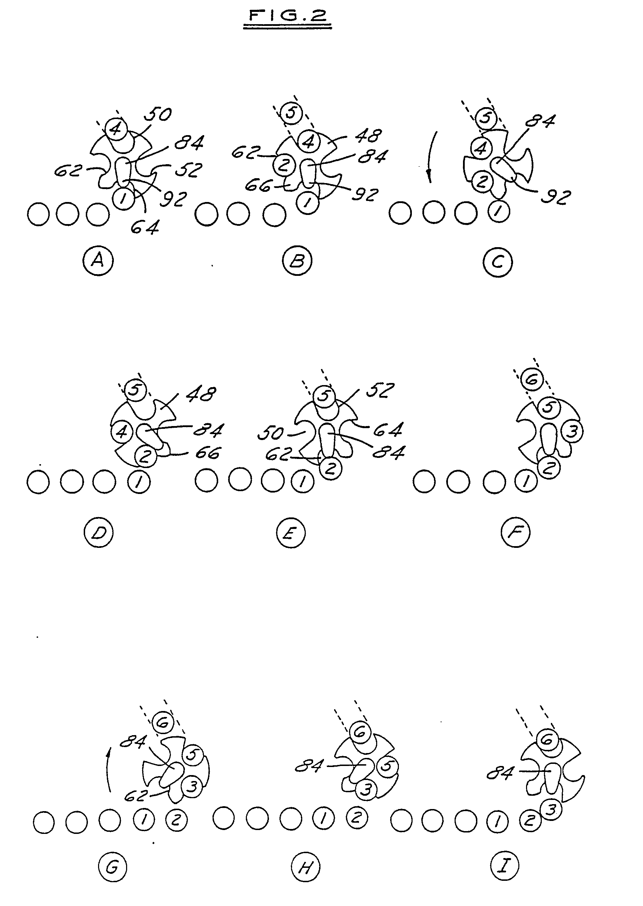

The operation of the feeding mechanism 20 can be described with reference to Figures 1 and 2. The gearing mechanism 136 is operably linked to both the conveyor and the sprocket such that the conveyor passes the round of ammunition 22 over slot 47 when receptacle slot 50 is in its first position. As the conveyor 28 continues to move, the ammunition is forced down by the concave surface 44 of fence 42 through inlet 47 and into receptacle slot 50.

The grooved pathway 134 is shaped about the central axis of cam gear 118 to cause the sprocket to oscillate in a 90° arc such that the sprocket moves from position shown in Figure 2(A) to a position shown in Figure 2(E) and back again to the position shown in Figure 2(I). In addition, at the end of each 90° oscillation, the sprocket comes to a momentary rest.

The grooved pathway 122 is shaped about the central axis of cam gear 118 to oscillate the ejector 84 through a 90° arc centered about the vertically downward direction. In addition, the ejector 84 oscillates in 45° intervals with rests between each interval.

The synchronization of the ejector 84 and sprocket 48 can best be described by reference to Figure 2. Ammunition round 4 is passed from the conveyor to slot 50 when the sprocket is first positioned and momentarily at rest. The ejector 84 has the cams 92 pointing downwardly extending into discharge slot 64 and abutting spent ammunition round 1 and rejecting it from the slot 64. Rounds 2 and 3 are in the firing chambers. Round 3 is being rammed into the firing chamber 18 by bolt lugs 140 passing through receptacle slot 52 in grooves 58. Bolt lugs 138 extending through discharge slot 62 in grooves 74 are withdrawing spent round 2 from firing chamber 16.

Figures 1 and 2(B) show spent ammunition round 2 being fully positioned within discharge slot 62. Round 3 is in firing chamber 18. Bolt lugs 138 and 140 are then withdrawn from slots 52 and 67. At this point, sprocket 48 begins to rotate in a counter-clockwise direction with ejector 84 still remaining in a rest position. Round 3 is fired. Tooth 66 moves toward alignment with the ejector 84. Since the tooth 66 extends radially farther out than the cams 92, the tapered surface 70 of tooth 66 will abut the half ejected ammunition round 1 and cam it past caming surface 144 through outlet 142 onto the return portion 30 of the conveyor 26.

Once the ammunition round 1 is on the return conveyor, the ejector 84 then oscillates 45° in a counter-clockwise direction to a designated first position and momentarily rests as shown in Figure 2(C). The sprocket 48 continues to oscillate through its 90° arc to bring slot 62 to a position aligned with outlet 142 and slot 50 aligned with firing chamber 16. At this position, as illustrated in Figure 2(D), the ejector cams 92 and 94 are aligned with sprocket tooth 66. The sprocket 48 momentarily rests while a new round of ammunition 5 is received from the conveyor to receptacle slot 52, round 4 is rammed by bolts 138 into firing chamber 16, and bolts 140 extend through discharge slot 64 to withdraw the spent ammunition round 3. In addition, ejector cam 84 begins its oscillation in a clockwise direction passing into discharge slot 62 half ejecting spent round 2 therefrom as illustrated in Figure 2(E). When the ejector cam reaches its vertically downward position, the ejector 84 rests momentarily, as shown in Figure 2(F). Sprocket 48 then begins its 90° oscillation in a clockwise direction so that sprocket tooth 66 has its tapered camming surface 68 abut fired round 2 to fully eject it through passage 142 onto the return portion 30 of conveyor 26.

The ejector cam 84 then rotates 45° in a clockwise direction to attain a designated second position, as illustrated in Figure 2(G). Sprocket 48 completes its 90° rotation to bring ammunition round 3 in communication with passage 142 for ejection as shown in Figure 2(H). The cycle is then repeated with ejector cam 92 rotating to half-eject round 3 illustrated in Figure 2(I).

In this fashion, a multiple number of rounds of ammunition can be rapidly fired into two fixed barrels of a gun.

The oscillation of the sprocket and ejector cam provides for a device with a minimal number of parts and light weight.

**Claims**

1. An article handling system comprising a work station (16), means (20) for feeding articles to the work station, said feeding means including a feed member (48) mounted for rotation by a drive means (80, 126, 128) and having a receptacle slot (50) opening into the perimeter of the feed member (48) and parallel to the rotational axis thereof for receiving articles (22) for transfer to the work station (16) in accordance with rotation of the feed member (48) between first and second positions, the drive means (80, 126, 128) being arranged to rotate the feed member (48) so that in the first position the receptacle slot (50) receives one article from a conveyor (26) and in the second position that article can pass from the receptacle slot (50) to the work station (16), characterised in that the feed member (48) further includes a discharge slot (62) arranged so that in the first position the discharge slot (62) receives another article from the work station (16) and in the second position the other article can be ejected from the discharge slot (62), the discharge slot (62) also opening into the perimeter of the feed member (48) and that an ejector cam member (84) is provided which is rotatably driven by a further drive means (100, 110, 112) synchronised with the first-mentioned drive means (80, 126, 128) so that the cam meber (84) abuts the other article held in the discharge slot (62) as the feed member rotates from the second position to the first position to move the other article radially outwardly from the discharge slot (62).

2. An article handling system according to claim 1, wherein there are provided first and second work stations (16, 18), and said feed member (48) includes first and second receptacle slots (50, 52), characterised in that said feed member (48) further includes first and second discharge slots (62, 64) associated with the first and second work stations (16, 18) respectively, said slots being disposed in the feed member (48) such that when in the first position, the first receptacle and discharge slots (50, 62) are positioned respectively to receive an article from the conveyor (26) and to receive an article from the first work station (16), when in the second position, the second receptacle and discharge slots (52, 64) are similarly positioned with respect to the conveyor (26) and the second work station (18) whereas the first receptacle and discharge slots (50, 62) are positioned to allow articles respectively to pass from the first work station (16) and to be ejected from the first discharge slot (62), and when in the first position, the second receptacle and discharge slots (52, 64) are similarly positioned with respect to the second work station (18).

3. A gun including an article handling system according to claim 2, characterised in that the first and second work stations comprise first and second firing chambers (16, 18) aligned with the feed member (48) and in communication with first and second barrels (12, 14), the articles comprising rounds of ammunition (22) delivered to the feed member (48) by the conveyor (26) and spent rounds ejected therefrom.

4. A gun according to claim 3, characterised in that two camming-surfaces (144, 146) are provided being spaced apart to form an outlet (142) therebetween, the outlet being aligned with the first and second discharge slots (62, 64) when the feed member (48) is in its second and first positions respectively, the feed member (48) being in the form of a sprocket having a profiled tooth (66) extending radially outwardly from the axial centre thereof between the first and second discharge slots (62, 64), the radially outer portions (70) of the two surfaces of the profiled tooth (66) tapering towards each other and extending radially beyond the reach of the radial outer edges (92, 94) of the ejector cam meber (84), the further drive means (100, 110, 122) rotating the ejector cam member (84) into each of the discharge slots (62, 64) so as to abut the respective spent round in the slot and move it radially outwardly into the outlet (142), and the first-mentioned drive means (80, 126, 128) rotating the sprocket such that the profiled tooth (66) rotates towards the ejector cam member (84) and one of the tapered surfaces of the profiled tooth abuts against the spent round to move it radially outwardly through the outlet (142), the spent round further abutting one of the camming surfaces (144, 146) as it passes through the outlet (142).

5. A gun according to claim 4, characterised in that the feed member sprocket (48) has a hollow interior for housing the ejector cam member (84), and the ejector cam member (84) is arranged to abut each spent round at two axially spaced apart positions to move the round translationally with a minimal pivotable movement from the aligned longitudinal position with respect to the firing chamber and discharge slot.

6. A gun according to claim 4 or 5, characterised in that the first-mentioned and further drive means include two driveshafts (80, 100) coaxially and mutually rotatably mounted along the central longitudinal axis of the sprocket (48), the end of each driveshaft (80, 100) having a gear (126,110) rigidly mounted thereto, each gear engaging a respective rack (128, 112) which in turn is connected to a face cam gear (118) for reciprocating movement whereby the driveshafts (80, 100) oscillate the sprocket (48) and ejector cam member (84) reciprocally through an arc.

7. A gun according to claim 4, 5 or 6 characterised in that an inlet passage (47) is provided aligned with the first and second receptacle slots (50, 52) when the feed member (48) is in its first and second positions respectively, and a third camming surface (44) is positioned adjacent the conveyor (26) such that an ammunition round (22) on the conveyor abuts the third camming surface (44) and is directed out of the conveyor through the inlet passage (47) and into one of the receptacle slots (50, 52) of the feed member (48).

8. An article handling system comprising first and second work stations (16, 18), means (20) for feeding articles (22) from a conveyor (26) to the work stations, the feeding means including first and second receptacle means (50, 52) for receiving the articles from the conveyor (26), and a drive means (80, 126, 128) for reciprocating each of the receptacle means (50, 52) between a first position wherein to receive an article (72) from the conveyor (26) and a second position in communication with the respective work station so that the articles can pass from the receptacle means to the work stations, characterised in that there are provided first and second discharge means (62, 64) each reciprocating between a first position for receiving used articles from the first and second work stations (16, 18) respectively and a second position for passing the used articles through an outlet (142), a synchronising means (118, 128) for reciprocating the discharge means between two positions such that the first discharge means (62) is in its first position when the first receptacle means (50) is in its respective first position and the second discharge means (64) and second receptacle means (52) are in their respective second positions, and the first discharge means (62) is in its second position when the first receptacle means (50) is in its respective second position and the second discharge means (64) and second receptacle means (52) are in their respective first positions, and an ejection means (84) for ejecting the used articles from their respective discharge means (62, 64) when in their respective second positions.

9. An article handling system according to claim 8, characterised in that the receptacle means and discharge means are slots (50, 52, 62, 64) on a carrier member (48), each slot is adapted to receive one article (22), the drive means (80, 126, 128) moves the carrier member (48), the spacing of the slots within the carrier member (48) being such that respective receptacle and discharge slots are in their respective first position and second position at simultaneous times.

10. An article handling system according to claim 9, characterised in that the carrier member is a sprocket (48) rotatably mounted about its central longitudinal axis, the sprocket having said slots circumferentially placed about the perimeter thereof, and the drive means (80, 126, 128) oscillates the sprocket pivotably about its central axis between first and second positions whereby the slots oscillate between their respective first and second positions.

**Revendications**

1. Système de manipulation d'articles comprenant un poste de travail (16), un dispositif d'alimentation (20) pour amener des articles au poste de travail, ce dispositif d'alimentation comprenant un organe d'alimentation (48) monté de manière à tourner à l'intervention d'un dispositif d'entraînement (80, 126, 128) et présentant une loge réceptrice qui s'ouvre dans le périmètre de l'organe d'alimentation (48) et qui est parallèle à l'axe de rotation de celui-ci en vue de recevoir des articles (22) à transférer au poste de travail (16) selon la rotation de l'organe d'alimentation (48) entre une première et une seconde position, le dispositif d'entraînement (80, 126, 128) étant prévu pour faire tourner l'organe d'alimentation (48) de telle sorte que, dans la première position, la loge réceptrice (50) reçoive un article d'un transporteur (26) et que, dans la seconde position, cet article puisse passer de la loge réceptrice (50) au poste de travail (16), caractérisé en ce que l'organe d'alimentation (48) comprend, en outre, une loge d'évacuation (62) agencée de telle manière que, dans la première position, la loge d'évacuation (62) reçoive un autre article du poste de travail (16) et que, dans la seconde position l'autre article puisse être éjecté de la loge d'évacuation (62), la loge d'évacuation (62) s'ouvrant aussi dans le périmètre de l'organe d'alimentation (48) et une came d'éjecteur (84) est prévue et est entraînée en rotation par un autre dispositif d'entraînement (100, 110, 112) synchronisé avec le dispositif d'entraînement mentionné en premier lieu (80, 126, 128) de telle sorte que la came (84) vienne en contact avec l'autre article maintenu dans la loge d'évacuation (62) lorsque l'organe d'alimentation tourne à partir de la seconde position vers la première pour déplacer l'autre article radialement vers l'extérieur à partir de la loge d'évacuation (62).

2. Système de manipulation d'articles suivant la revendication 1, dans lequel sont prévus un premier et un second poste de travail (16, 18) et l'organe d'alimentation (48) comprend une première et une seconde loge réceptrice (50, 52), caractérisé en ce que l'organe d'alimentation (48) comprend, en outre, une première et une seconde loge d'évacuation (62, 64) associées au premier et au second poste de travail (16, 18), respectivement, ces loges étant disposées dans l'organe d'alimentation (48) de telle manière que, dans la première position les premières loges réceptrice et d'évacuation (50, 62) soient positionnées respectivement un article du transporteur (26) et un article du premier poste de travail (16), que, dans la seconde position, les secondes loges réceptrice et d'évacuation (52, 64) soient positionnées de manière semblable par rapport au transporteur (26) et au second poste de travail (18), tandis que les premières loges réceptrice et d'évacuation (50, 62) sont positionnées pour permettre respectivement qu'un article puisse passer à partir du premier poste de travail (16) et qu'un article puisse être éjecté de la première loge d'évacuation (62) et que, dans la première position, les secondes loges réceptrice et d'évacuation (52, 64) sont positionnées de manière semblable par rapport au second poste de travail (18).

3. Arme à feu comprenant un système de manipulation d'articles suivant la revendication 2, caractérisée en ce que le premier et le second poste de travail comprennent une première et une seconde chambre de mise à feu (16, 18) en ligne avec l'organe d'alimentation (48) et communiquant avec un premier et un second canon (12, 14), les articles comprenant des munitions complètes (22) fournies à l'organe d'alimentation (48) par le transporteur (26) et des munitions brûlées qui en sont éjectées.

4. Arme à feu suivant la revendication 3, caractérisée en ce que deux surfaces de came (144, 146) sont prévues espacées l'une de l'autre pour former une sortie (142) entre elles, la sortie étant en ligne avec la première et avec la seconde loge d'évacuation (62, 64) lorsque l'organe d'alimentation (48) se trouve respectivement dans sa seconde et dans sa première position, l'organe d'alimentation (48) ayant la forme d'un barillet présentant une dent profilée (66) qui s'étend radialement vers l'extérieur à partir de son milieu axial entre la première et la seconde loge d'évacuation (62, 64), les parties radialement externes (70) des deux surfaces de la dent profilée (66) étant inclinées l'une vers l'autre et s'étendant radialement au-delà des limites des bords extérieurs radiaux (92, 94) de la cam d'éjecteur (84), l'autre dispositif d'entraînement (100, 110, 112) faisant tourner la came d'éjecteur (84) dans chacune des loges d'évacuation (62, 64) pour venir en contact avec la munition brûlée respective dans la loge et la déplacer radialement vers l'extérieur dans la sortie (142), et le dispositif d'entraînement mentionné en premier lieu (80, 126, 128) faisant tourner le barillet de manière que la dent profilée (66) tourne vers la came d'éjecteur (84) et que l'une des surfaces inclinées de la dent profilée vienne en contact avec la munition brûlée pour la déplacer radialement vers l'extérieur à travers la sortie (142), la munition brûlée venant, en outre, en contact avec une des surfaces de came (144, 146) lorsqu'elle passe à travers la sortie (142).

5. Arme à feu suivant la revendication 4, caractérisée en ce que le barillet formant organe d'alimentation (48) présente un intérieur creux pour loger la came d'éjecteur (84) et la came d'éjecteur (84) est prévue pour venir en contact avec chaque munition brûlée en deux positions espacées axialement l'une de l'autre pour déplacer la munition par translation avec un mouvement de pivotement minimum à partir de la position longitudinalement alignée par rapport à la chambre de mise à feu et à la loge d'évacuation.

6. Arme à feu suivant la revendication 4 ou 5, caractérisée en ce que le dispositif d'entraînement mentionné en premier lieu et l'autre disposifit d'entraînement comprennent deux arbres d'entraînement (80, 100) montés coaxialement et pouvant tourner mutuellement le long de l'axe longitudinal central du barillet (48), l'extrémité de chaque arbre d'entraînement (80, 100) présentant un pignon (126, 110) qui y est fixé rigidement, chaque pignon entrenant une crémaillère (128, 112) respective qui est à son tour reliée à une plateau-came denté (118) en vue d'un mouvement de va-et-vient, de sorte que les arbres d'entraînement (80, 100) font osciller le barillet (48) et la came d'éjecteur (84) en un mouvement de va-et-vient selon un arc.

7. Arme à feu suivant la revendication 4, 5 ou 6, caractérisée en ce qu'un passage d'entrée (47) est prévu en ligne avec la première et la seconde loge réceptrice (50, 52) lorsque l'organe d'alimentation (48) se trouve dans sa première et dans sa seconde position respectivement, et une troisième surface de came (44) est placée contre le transporteur (26) de telle manière qu'une munition complète (22) présente sur le transporteur vienne en contact avec la troisième surface de came (44) et soit dirigée hors du transporteur à travers le passage d'entrée (47) et dans l'une des loges réceptrices (50, 52) de l'organe d'alimentation (48).

8. Système de manipulation d'articles comprenant un premier et un second poste de travail (16, 18), un dispositif (20) pour amener des articles (22) d'un transporteur (26) aux postes de travail, le dispositif d'alimentation comprenant un premier et un second moyen récepteur (50, 52) pour recevoir les articles du transporteur (26) et un dispositif d'entraînement (80, 126, 128) pour déplacer chaque moyen récepteur (50, 52) d'un mouvement de va-et-vient entre une première position dans laquelle ils reçoivent un article (72) du transporteur et une seconde position communiquant avec le poste de travail correspondant, de sorte que les articles puissent passer des moyens récepteurs aux postes de travail, caractérisé en ce que sont prévus un premier et un second moyen d'évacuation (62, 64) se déplaçant chacun en un mouvement de va-et-vient entre une première position dans laquelle ils reçoivent des articles utilisés du premier et du second poste de travail (16, 18), respectivement, et une seconde position dans laquelle ils font passer les articles utilisés à travers une sortie (142), un dispositif de synchronisation (118, 128) pour déplacer les moyens d'évacuation en un mouvement de va-et-vient entre deux positions telles que le premier moyen d'évacuation (62) se trouve dans sa première position lorsque le premier moyen récepteur (50) se trouve dans sa première position respective et que le second moyen d'évacuation (64) et le second moyen récepteur (52) se trouvent dans leurs secondes positions respectives et que le premier moyen d'évacuation (62) se trouve dans sa seconde position lorsque le premier moyen récepteur (50) se trouve dans sa seconde position respective et que le second moyen d'évacuation (64) et le second moyen récepteur (52) se trouvent dans leurs premières positions respectives, et un dispositif d'éjection (48) pour éjecter les articles utilisés de leurs moyens d'évacuation (62, 64) lorsqu'ils se trouvent dans leurs secondes positions respectives.

9. Système de manipulation d'articles suivant la revendication 8, caractérisé en ce que les moyens récepteurs et les moyens d'évacuation sont des loges (50, 52, 62, 64) sur un support (48), chaque loge étant conçue pour recevoir un article (22), et le dispositif d'entraînement (80, 126, 128) déplace le support (48), l'espacement des loges dans le support (48) étant tel que les loges réceptrice et d'évacuation respectives se trouvent dans leurs première et seconde positions respectives au même moment.

10. Système de manipulation d'articles suivant la revendication 9, caractérisé en ce que le support est un barillet (48) monté à rotation autour de son axe longitudinal central, le barillet présentant les loges disposées circonférentiellement autour de son périmètre et le dispositif d'entraînement (80, 126, 128) fair oscillet le barillet à pivotement autour de son axe central entre une première et une seconde position, de sorte que les loges oscillent entre leurs première et seconde positions respectives.

**Patentansprüche**

1. System zum Manipulieren von Gegenständen, mit einer Arbeitsstation (16), Einrichtungen (20) für die Zufuhr von Gegenständen zur Arbeitsstation mit einem mittels eines Antriebs (80, 126, 128) in Drehung versetzbar gelagerten Zubringerteil (48), welches einen sich parallel zu seiner Drehachse erstreckenden und an seinem Umfang ausmündenden Eintragsschlitz (50) für die Aufnahme von Gegenständen (22) und Überführung derselben zur Arbeitsstation in Abhängigkeit von der Drehung des Zubringerteils (48) zwischen einer ersten und einer zweiten Stellung aufweist, wobei das Zubringerteil (48) mittels des Antriebs (80, 126, 128) derart in Drehung versetzbar ist, daß der Eintragsschlitz (50) in der ersten Stellung einen Gegenstand von einer Fördereinrichtung (26) aufnimmt und der Gegenstand in der zweiten Stellung vom Eintragsschlitz (50) zur Arbeitsstation (16) überwechseln kann, dadurch gekennzeichnet, daß das Zubringerteil (48) ferner einen Austragsschlitz (62) aufweist, welcher so angeordnet ist, daß er in der ersten Stellung einen anderen Gegenstand von der Arbeitsstation (16) aufnimmt und der andere Gegenstand in der zweiten Stellung aus dem Austragsschlitz (62) ausgeworfen werden kann, wobei der Austragsschlitz (62) ebenfalls im Umfang des Zubringerteils (48) ausmündet, und daß ein Auswerfer-Kämmglied (84) vorgesehen ist, welches mittels eines mit dem zuerst genannten Antrieb (80, 126, 128) synchronisierten zweiten Antriebs (100, 110, 112) derart in Drehung versetzbar ist, daß es bei der Drehung des Zubringerteils (48) von der zweiten in die erste Stellung an dem im Austragsschlitz (62) gehaltenen anderen Gegenstand angreift und ihn radial auswärts aus dem Austragsschlitz (62) herausbewegt.

2. System zum Manipulieren von Gegenständen nach Anspruch 1, bei welchem eine erste und eine zweite Arbeitsstation (16, 18) vorgesehen sind und das Zubringerteil (48) einen ersten und einen zweiten Eintragsschlitz (50, 52) aufweist, dadurch gekennzeichnet, daß das Zubringerteil ferner einen ersten und einen zweiten, der ersten bzw. der zweiten Arbeitsstation (16 bzw. 18) zugeordneten Austragsschlitz (62, 64), welche derart am Zubringerteil (48) angeordnet sind, daß sich der erste Eintragsschlitz und der erste Austragsschlitz (50 bzw. 62) in der ersten Stellung jeweils in einer Lage für die Aufnahme eines Gegenstands von der Fördereinrichtung (26) bzw. für die Aufnahme eines Gegenstands von der ersten Arbeitsstation (16) befinden und der zweite Eintragsschlitze (52) bzw. der zweite Austragsschlitz (64) in der zweiten Stellung in einer entsprechenden Lage relativ zur Fördereinrichtung (26) bzw. zur zweiten Arbeitsstation (18) ausgerichtet sind, während sich der erste Eintragsschlitz (50) und der erste Austragsschlitz (62) in einer Stellung befinden, in welcher Gegenstände in die erste Arbeitsstation (16) überführt und aus dem ersten Austragungsschlitz (62) ausgeworfen werden können, und der zweite Eintragsschlitz (52) und der zweite Austragsschlitz (64) in der ersten Stellung in einer entsprechenden Lage in bezug auf die zweite Arbeitsstation (18) ausgerichtet sind.

3. Rohrwaffe mit einem System zum Manipulieren von Gegenständen nach Anspruch 2, dadurch gekennzeichnet, daß die erste und die zweite Arbeitsstation ein erstes und ein zweites, jeweils mit dem Zubringerteil (48) fluchtendes Patronenlager (16, 18) aufweisen, welche in offener Verbindung mit einem ersten und einem zweiten Rohr (12, 14) stehen, und daß die Gegenstände Patronen (22) sind, welche dem Zubringerteil (48) von der Fördereinrichtung (26) augeführt werden, bzw. Patronenhülsen, welche daraus ausgeworfen werden.

4. Rohrwaffe nach Anspruch 3, dadurch gekennzeichnet, daß sie zwei Kämmflächen (144, 146) aufweist, welche in gegenseitigem Abstand angeordnet sind, so daß sie zwischen sich einen Auslaß (142) begrenzen, welcher in der ersten bzw. der zweiten Stellung des Zubringerteils (48) auf den zweiten bzw. den ersten Austragsschlitz (64 bzw. 62) ausgerichtet ist, daß das Zubringerteil (48) die Form eines Zellenrads aufweist, mit einem profilierten Zahn (66), welcher sich von der axialen Mitte desselben zwischen dem ersten und dem zweiten Austragsschlitz (62, 64) radial auswärts erstreckt, wobei die Radial äußeren Teile (70) der beiden Oberflächen des profilierten Zahns (66) zueinander konvergieren und sich in radialer Richtung über die Reichweite der radial äußeren Ränder (92 94) des Auswerfer-Kämmglieds (84) hinaus erstrecken, daß der weitere Antrieb (100, 110, 112) das Auswerfer-Kämmglied (84) so in jeden der Austragsschlitze (62, 64) hineindreht, daß es in Anlage an der darin befindlichen Patronenhülse kommt und sie radial auswärts in den Auslaß (142) bewegt, und daß der zuerst genannte Antriebs (80, 126, 128) das Zellenrad derart in Drehung versetzt, daß sich der profilierte Zahn (66) auf das Auswerfer-Kämmglied (84) zu dreht und eine der konvergierenden Oberflächen in Anlage an der Patronenhülse kommt, um sie durch den Auslaß (142) hindurch radial auswärts zu bewegen, so daß die Patronenhülse bei ihrem Durchgang durch den Auslaß (142) in Anlage an einer der Kämmflächen (144, 146) kommt.

5. Rohrwaffe nach Anspruch 4, dadurch gekennzeichnet, daß das als Zellenrad ausgebildete Zubringerteil (48) einen hohlen Innenraum für die Aufnahme des Auswerfer-Kämmglied (84) aufweist, und daß das Auswerfer-Kämmteil (84) so ausgebildet ist, daß es an zwei in axialer Richtung voneinander entfernten Stellen an jeder Patronenhülse angreift, um diese mit einem Minimum an Verschwenkung aus der in Längsrichtung auf das Patronenlager und den Austragsschlitz ausgerichteten Lage in Querrichtung zu bewegen.

6. Rohrwaffe nach Anspruch 4 oder 5, dadurch gekennzeichnet, daß der zuerst Genannte und der weitere Antrieb zwei Antriebswellen (80, 100) aufweisen, welche koaxial und relativ zueinander drehbar entlang der zentralen Längsachse des Zellenrads (48) gelagert sind, daß am Ende jeder Antriebswelle (80, 100) ein Ritzel (126, 110) befestigt ist, daß jedes Ritzel sich in Eingriff mit einer zugeordneten Zahnstange (128, 112) befindet, welche ihrerseits zum Erzeugen einer hin- und hergehenden Bewegung mit einem Stirnnocken-Zahnrad (118) verbunden ist, so daß die Antriebswellen (80, 100) das Zellenrad (48) und das Auswerfer-Kämmglied (84) über einen Kreisbogensektor in hin- und hergehende Drehung versetzen.

7. Rohrwaffe nach Anspruch 4, 5 oder 6, dadurch gekennzeichnet, daß eine Einlaß (47 vorgesehen ist, welcher in der ersten bzw. der zweiten Stellung des Zubringerteils (48) auf den ersten bzw. den zweiten Eintragsschlitz (50, 52) ausgerichtet ist, und daß eine dritte Kämmfläche (44) zunächst der Fördereinrichtung (26) derart angeordnet ist, daß eine von der Fördereinrichtung zugeführte Patrone (22) in Anlage an der dritten Kämmfläche (44) kommt und von dieser von der Fördereinrichtung weg durch den Einlaß (47) hindurch und in einen der Eintragsschlitze (50, 52) des Zubringerteils (48) geleitet wird.

8. System zum Manipulieren von Gegenständen, mit einer ersten und einer zweiten Arbeitsstation (16, 18), Einrichtungen (20) zum Überführen von Gegenständen (22) von einer Fördereinrichtung (26) zu den Arbeitsstationen mit einer ersten und einer zweiten Aufnahme (50, 52) für die Übernahme von Gegenständen von der Fördereinrichtung (26) und einem Antrieb (80, 126, 128) für die Hin- und Herbewegung jeder der Aufnahmen (50, 52) zwischen einer ersten Stellung, in welcher sie einen Gegenstand (72) von der Fördereinrichtung (26) übernimmt und einer in Wirkbeziehung zur jeweiligen Arbeitsstation liegenden zweiten Stellung, in welcher die Gegenstände von der jeweiligen Aufnahme in die jeweilige Arbeitsstation überführt werden können, dadurch gekennzeichnet, daß eine erste und eine zweite Austragseinrichtung (62, 64) vorgesehen sind, welche jeweils zwischen einer ersten Stellung für die Übernahme von gebrauchten Gegenständen von der ersten und der zweiten Arbeitsstation (16, 18) und einer zweiten Stellung für den Austritt der gebrauchten Gegenstände durch einen Auslaß (142) hindurch hin und herbewegbar sind, und daß die Austragseinrichtungen mittels einer Synchronisiereinrichtung (118, 128) derart zwischen den beiden Stellungen hin und her bewegbar sind, daß sich die erste Austragseinrichtung (62) in ihrer ersten Stellung befindet, wenn sich die erste Aufnahme (50) in ihrer entsprechenden ersten Stellung und die zweite Austragseinrichtung (64) sowie die zweite Aufnahme in ihrer jeweiligen zweiten Stellung befinden, und die erste Austragseinrichtung (62) sich in ihrer zweiten Stellung befindet, wenn sich die erste Aufnahme (50) in ihrer entsprechenden zweiten Stellung und die zweite Austragseinrichtung (64) sowie die zweite Aufnahme (54) in ihrer jeweiligen ersten Stellung befinden, und daß eine Auswerfereinrichtung (84) zum Auswerfen der gebrauchten Gegenstände aus der jeweiligen Austragseinrichtung (62, 64) in der jeweiligen zweiten Stellung derselben vorgesehen ist.

9. System zum Manipulieren von Gegenständen nach Anspruch 8, dadurch gekennzeichnet, daß die Aufnahmen und Austragseinrichtungen als Schlitze (50, 52; 62, 64) in einem Trägerteil (48) ausgebildet sind, daß jeder Schlitz für die Aufnahme eines Gegenstands (22) eingerichtet ist, daß das Trägerteil (48) mittels des Antriebs (80, 126, 128) bewegbar ist, und daß die gegenseitigen Abstände der Schlitze innerhalb des Trägerteils (48) so bestimmt sind, daß sich die einander zugeordneten Aufnahme- und Austragsschlitze jeweils zur gleichen Zeit in der jeweiligen ersten bzw. zweiten Stellung befinden.

10. System zum Manipulieren von Gegenständen nach Anspruch 9, dadurch gekennzeichnet, daß das Trägerteil ein um seine Längsmittelachse drehbar gelagertes Zellenrad (48) ist, in dessen Umfang die genannten Schlitze geformt sind, und daß das Zellenrad mittels des Antriebs (80, 126, 128) um seine Mittelachse herum zwischen einer ersten und einer zweiten Stellung hin und her verdrehbar ist, so daß sich die Schlitze zwischen ihren ersten und zweiten Stellungen hin und her bewegen.

FIG.1

FIG.4

**0 038 384**

FIG.2

FIG.3

FIG.5